(19) Europäisches Patentamt
European Patent Office
Office européen des brevets

(11) Veröffentlichungsnummer: **0 081 163**
**B1**

(12) # EUROPÄISCHE PATENTSCHRIFT

(45) Veröffentlichungstag der Patentschrift: **17.09.86**

(51) Int. Cl.⁴: **C 08 J 3/10**, C 09 D 3/58 // (C08J3/10, C08L63:00)

(21) Anmeldenummer: **82110947.7**

(22) Anmeldetag: **26.11.82**

(54) **Stabile wässrige Epoxydharzdispersion, Verfahren zu deren Herstellung und deren Verwendung.**

(30) Priorität: **01.12.81 DE 3147458**

(43) Veröffentlichungstag der Anmeldung: **15.06.83 Patentblatt 83/24**

(45) Bekanntmachung des Hinweises auf die Patenterteilung: **17.09.86 Patentblatt 86/38**

(84) Benannte Vertragsstaaten: **AT BE CH DE FR GB LI NL**

(56) Entgegenhaltungen:
**DE - A - 1 595 492**
**DE - A - 1 905 696**
**FR - A - 2 376 881**
**US - A - 2 990 396**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Becker, Wilhelm, Dr., Öjendorfer Höhe 37c, D-2000 Hamburg 74 (DE)**

**EP 0 081 163 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es ist bekannt, Kunstharze durch Emulsionspolymerisation herzustellen und stabile wässrige Dispersionen dieser Harze dadurch zu erzeugen, dass man das feste Harz und ein geeignetes Dispergiermittel unter Rühren in Wasser gibt. Bei Kondensaten wie Epoxydharzen, die schwierig durch Emulsionskondensation herstellbar sind, muss man wässrige Dispersionen jedoch dadurch herstellen, dass man das Festharz in Wasser dispergiert. Solche Dispersionen sind im allgemeinen recht instabil und setzen sich schon innerhalb kurzer Zeit ab. Sie zeigen allgemein auch schlechte filmbildende Eigenschaften. Diese Nachteile, niedrige Stabilität der Dispersion und schlechte Filmeigenschaften, werden hauptsächlich durch die hohe Teilchengrösse des Harzes verursacht. Bei den auf herkömmliche Weise gebildeten Dispersionen von Festharzen liegt die Teilchengrösse des Harzes in der Grössenordnung von 50 µm oder grösser.

Die Herstellung von Überzugsmassen auf Basis von Polyepoxyd-Dispersionen wird in der US-A-3 772 228 offenbart, wonach eine heisshärtende Einkomponentenüberzugsmasse dadurch erzeugt wird, dass man ein festes, sprödes Polyepoxyd, einen festen, spröden Epoxydhärter, z.B. ein Polyanhydrid, sowie gegebenenfalls einen Epoxydhärtungsbeschleuniger in einer Flüssigkeit, welche kein Lösungsmittel für die verschiedenen Komponenten darstellt, mahlt und dispergiert. Aliphatische Kohlenwasserstoffe werden bevorzugt. Man erhält dabei Epoxyd-Dispersionen, die jedoch nicht wässrig sind und die der Verwendung von Kohlenwasserstofflösungsmitteln innewohnende Gefahren mit sich bringen.

Die Herstellung stabiler wässriger, von organischen Lösungsmitteln freien Dispersionen von Epoxydharzen verhältnismässig niedrigen Molekulargewichts (200 bis 4000, vorzugsweise 240 bis 1300) mit Teilchengrössen von weniger als etwa 10 µm unter Anwendung von anionen-aktiven, nichtionogenen, vorzugsweise jedoch kationenaktiven Dispergiermitteln ist ebenfalls bekannt (US-A-3 879 324). Hierbei wird das Epoxydharz bis zur Schmelze erhitzt, mit Wasser und dem Dispergiermittel vermischt und danach durch eine Kolloidmühle geführt. Nur solche Epoxydharze mit dem angegebenen Molekulargewicht, die unter 100 °C, dem Siedepunkt des Wassers, schmelzen, lassen sich nach diesem Verfahren dispergieren. Diese scharfe Beschränkung hat den Nachteil, dass sie zahlreiche nützliche Epoxydharzsysteme hohen Molekulargewichts ausschliesst. Abgesehen davon liefert die Dispergierung bei der Siedetemperatur des Wassers noch relativ grosse Teilchen, die sich schnell absetzen.

Ferner ist die Herstellung wässriger Dispersionen fester Epoxydharze nach einem Verfahren bekannt (DE-A-2 424 887), bei dem man einen ersten, aus Wasser und gewissen Dispergiermitteln bestehenden Strom und einen zweiten, ein geschmolzenes festes Harz oder eine Lösung eines festen Harzes in gewissen organischen Lösungsmitteln enthaltenden Strom in einen Mischer mit hoher Scherkraft einleitet, diese Ströme unter hoher Scherkraft bis zum angegebenen Dispersionsgrad vermischt und gegebenenfalls das organische Lösungsmittel durch Vakuumdestillation entfernt. Die bei diesem Verfahren verwendeten Dispergiermittel sind vor allem von Cellulose abgeleitete Stoffe, wie Guargummis, ferner Polyvinylalkohole, gegebenenfalls mit Alkyläther-, Arylalkyläther-, Phenoxy-, Amid- oder Amingruppen, oder auch Nonylphenoxypoly-(äthylenoxy)-äthanole. Die Teilchengrösse dieser so herstellbaren Dispersionen ist noch recht hoch, die Stabilität der Dispersionen ungenügend und die Eigenschaften der daraus hergestellten Überzüge und Lacke sind unbefriedigend.

Nach der DE-A-2 800 323 (FR-A-2 376 881) werden als Dispergiermittel Poly-(äthylenoxyd)-ester von Fettsäuren zur Herstellung stabiler, lösungsmittelfreier, wässriger Epoxydharzdispersionen eingesetzt. Selbst mit Hilfe einer Kolloidmühle erhält man nur eine Mindestteilchengrösse von 1 µm, die für eine längere Stabilität der Dispersionen nicht ausreichend ist.

Es wurde auch schon die Herstellung von Epoxydfestharzen beschrieben (US-A-4 122 067), die auch direkt in Form einer wässrigen Dispersion erhalten werden können. Dabei werden als Dispergiermittel Blockpolymere aus Äthylenoxyd und Polypropylenglykol oder Polymere aus Polyäthylenglykolen mit einem Molgewicht von 2000 bis 20 000 und Polyglycidyläthern von Polyphenolen mit einem Molgewicht von 300 bis 2000 im Molverhältnis von 2:1 bis 6:5 eingesetzt. Auch nach diesem Verfahren erhält man nur Dispersionen mangelhafter Stabilität mit einer Teilchengrösse von 1 bis 3 µm.

Es wurde nun eine stabile, wässrige Dispersion mit einem niedrigen Gehalt an Lösungsmitteln auf der Basis eines Epoxydharzes, einem nicht-ionogenen Dispergiermittel in Form eines Polyalkylenglykolderivats, organischen Lösungsmitteln und Wasser gefunden, die dadurch gekennzeichnet ist, dass sie

a) mindestens 35 Gew.-% Epoxydharz mit einem mittleren Epoxydäquivalentgewicht von 250 bis 5000,

b) 2 bis 20, vorzugsweise 7 bis 15 Gew.-%, bezogen auf das feste Epoxydharz, Dispergiermittel, bestehend aus Kondensationsprodukten von Polyalkylenglykolen mit Molgewichten von 200 bis 20 000, vorzugsweise 2000 bis 10 000, und Polyglycidyläthern mehrwertiger Phenole mit einem Epoxydäquivalentgewicht von 100 bis 2000, vorzugsweise 150 bis 450, im Äquivalentverhältnis OH-:Epoxydgruppen 1:(0,85 bis 1,5), vorzugsweise 1:(1 bis 1,25),

c) 0,2 bis 20 Gew.-% organisches Lösungsmittel mit einem Siedepunkt unter 160 °C und

d) 35 bis 60 Gew.-% Wasser

enthält, wobei die Summe der Anteile stets 100 Gew.-% beträgt, die Teilchengrösse im Durchschnitt kleiner als 1 µm ist und der Gesamtfeststoffgehalt der Dispersion 10 bis 80, vorzugsweise 30 bis 60 Gew.-% beträgt.

Überraschenderweise haben die erfindungsgemässen Dispersionen den Vorteil, dass sie sehr feinteilig sind.

Je nach dem Gehalt an organischen Lösungsmitteln kann man die Dispersion modifizieren. Beträgt z. B. der Anteil 0,2 bis 5 Gew.-% Lösungsmittel, so liegt gewöhnlich eine Dispersion im engeren Sinne, d. h. eine feine Verteilung fester Teilchen in der Flüssigkeit vor. Erhöht man jedoch den Lösungsmittelanteil auf 5 bis 20 Gew.-%, so erhält man in der Regel eine Emulsion, d. h. die Komponenten a) und/oder b) werden im Lösungsmittel gelöst und es ergibt sich daraus eine feine Verteilung des Lösungsmittels mit den darin gelösten Substanzen in der wässrigen Phase.

Ein weiterer Vorteil der erfindungsgemässen Dispersionen besteht darin, dass sie unter Umgebungsbedingungen längere Zeit, z. B. bis zu 12 Monate ohne Zusammenbacken der Epoxydharzteilchen gelagert werden können.

Als feste Epoxydharze a) kommen alle bekannten Polyglycidyläther mit mehr als einer endständigen Glycidylgruppe

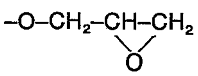

in Frage, vor allem solche mit einem mittleren Epoxydäquivalentgewicht zwischen 300 und 1000. Sie leiten sich zweckmässig von mehrwertigen, vorzugsweise zweiwertigen Phenolen und Epihalogenhydrinen, z. B. Epichlorhydrin, ab und tragen gegebenenfalls Substituenten wie Chlor, Hydroxylgruppen, Ätherreste und dergleichen. Geeignete Phenole sind z. B. 2,2-Bis-(3-brom-4-hydroxyphenyl)propan, 2,2-Bis-(3,5-dichlor-4-hydroxyphenyl)propan, 2,2-Bis-(3-chlor-4-hydroxyphenyl)propan, Bis-(hydroxyphenyl)-methan, Bis-(4-hydroxyphenyl)sulfon, Bis-(4-hydroxyphenyl)-sulfid, Resorcin und Hydrochinon, vorzugsweise 2,2-Bis-(4-hydroxyphenyl)-propan.

Geeignete Dispergiermittel b) sind z. B. Kondensationsprodukte von Polyalkylenglykolen mit Polyglycidyläthern mit einem Epoxydäquivalentgewicht von 100 bis 2000, der unter a) genannten Art, wobei als Polyalkylenglykol Copolymere aus Äthylenoxyd und Propylenoxyd, Polyäthylen-, Polypropylen-, Polybutylenglykole, jeweils einzeln oder im Gemisch, bevorzugt Polyäthylenglykole in Frage kommen.

Die Dispergiermittel können z. B. durch Kondensation der genannten Glykole mit den Glycidyläthern in Gegenwart spezifischer Katalysatoren bei erhöhter Temperatur, im allgemeinen bei 50 bis 200, vorzugsweise 90 bis 150 °C, gewonnen werden. Geeignete Katalysatoren hierfür sind z. B. Bortrifluorid und seine Komplexe, z. B. mit Wasser, Phosphorsäure, Essigsäure (1:1 und 1:2), Methanol, Diäthyläther, Tetrahydrofuran, Phenol, Trikresylphosphat, Äthylenglykolmonoäthyläther (MG 200), Polyäthylenglykol (MG 200), Dimethylsulfoxyd, Di-n-Butyläther, Di-n-Hexyläther, Bernsteinsäure, ferner mit Aminen, wie mit Monoäthylamin, Benzylamin oder dergleichen. Es eignen sich jedoch auch Lewis-Säuren auf anderer Basis, wie $SnCl_4$. Bevorzugt werden $BF_3$-Diäthyläther und $BF_3$-Essigsäure eingesetzt. Die Menge an Katalysator beträgt im allgemeinen 0,1 bis 5, bevorzugt 0,2 bis 1 Gew.-%, bezogen auf das Reaktionsgemisch. Zur besseren Dosierung kann der Katalysator in einem für den Komplex inerten Lösungsmittel wie Diäthyläther, einem Glykol- oder cyclischen Äther oder dergleichen, vorzugsweise Dioxan bis zu 0,5 bis 10, vorzugsweise 1 bis 3 Gew.-% verdünnt werden.

Die erfindungsgemäss vorhandenen organischen Lösungsmittel c) müssen mehrere Voraussetzungen erfüllen. Vor allem müssen sie das Epoxydharz lösen, sofern der Lösungsmittelanteil im Bereich von 5 bis 20 Gew.-% liegt. Zweitens sollten sie leicht durch Vakuumdestillation aus dem wässrigen System entfernbar sein. Sie zeichnen sich somit durch entsprechende Flüchtigkeit, relativ niedrigen Siedepunkt (unter 160 °C) und durch geeignetes azeotropisches Verhalten im Wasser aus. Wasserlöslichkeit oder Wassermischbarkeit sind dagegen nicht Bedingung für die Eignung des organischen Lösungsmittels. In manchen Fällen kann sogar ein wasserlösliches Lösungsmittel wie Aceton weniger geeignet sein als ein Lösungsmittel mit geringerer Wasserlöslichkeit wie Methyläthylketon oder ein fast wasserunlösliches Lösungsmittel wie Toluol. Gemische organischer Lösungsmittel sind ebenfalls verwendbar.

Geeignete Lösungsmittel sind z. B. Ketone, wie Methyläthylketon, Methylamylketon, Diäthylketon, Aceton, Methylisopropylketon und Cyclohexanon; Äther, wie Tetrahydrofuran, 1,2-Dimethoxyäthan und 1,2-Diäthoxyäthan; Ester, wie Äthylacetat und n-Butylacetat; Alkohole, wie Iso- und n-Butanol, Iso- und n-Propanol, Amylalkohole; aromatische Kohlenwasserstoffe, wie Benzol, Toluol und Xylol; halogenierte aromatische Kohlenwasserstoffe, wie Chlorbenzol. Bevorzugt sind Xylol, Toluol, n-Butanol und Isobutanol oder deren Gemische, vor allem ein Toluol-Isobutanol-Gemisch.

Die Erfindung betrifft auch ein Verfahren zur Herstellung der obengenannten Dispersionen, welches dadurch gekennzeichnet ist, dass eine 40 bis 95, vorzugsweise 60 bis 90 Gew.-%ige Lösung des Epoxydharzes a) in einem organischen Lösungsmittel c) zusammen mit einer 10 bis 90, vorzugsweise 20 bis 40 Gew.-%igen wässrigen Lösung des Dispersionsmittels b) bis zu einer feinteiligen Öl-in-Wasser-Dispersion dispergiert und anschliessend mit weiterem Wasser auf einen Festkörpergehalt von 10 bis 80, vorzugsweise 30 bis 60 Gew.-% verdünnt wird, wobei der Anteil des Dispergiermittels, bezogen auf das feste Epoxydharz, 2 bis 20 Gew.-% beträgt. Das mit der Lösung des Epoxydharzes a) eingebrachte Lösungsmittel kann weitgehend oder zum Teil entfernt werden, z. B. durch Destillation unter vermindertem Druck.

Die Destillation zur Abtrennung des Lösungsmittels wird zweckmässig bei einer Temperatur von höchstens 50, vorzugsweise zwischen 30 und 40 °C und bei einem Druck von vorzugsweise 13

bis 133, insbesondere bis etwa 27 mbar vorgenommen.

Die Dispergierung erfolgt zweckmässig unter Verwendung eines schnell laufenden Flügelrührers, einer Kolloidmühle, eines Homogenisators oder eines sonstigen Schnellmischers hoher Scherkraft, zum Beispiel eines Dissolvers.

Im Rahmen der Erfindung liegt auch die Verwendung der erfindungsgemässen Dispersionen in Kombination mit Härtungsmitteln zur Herstellung von wasserverdünnbaren bzw. wässrigen Systemen von kalt- und heisshärtenden Massen – z.B. als Zusatz zu Kunststoffzementen – und Beschichtungen, insbesondere Überzügen. Derartige Systeme können auch weitere Kondensations-, Polymerisations- und/oder Additionsharze enthalten, beispielsweise solche auf Basis von Hydroxyalkylacrylestern, Hydroxyalkyden, Polyestern, Epoxydharzen und dergleichen. Der Anteil dieser zusätzlichen Harze kann beispielsweise so bemessen werden, dass der Gesamtfeststoffgehalt des Gemisches etwa 10 bis 80, vorzugsweise 30 bis 60 Gew.-% beträgt. Durch den Zusatz solcher Harze können die Eigenschaften der aus den Dispersionen hergestellten Produkte in gewünschter Weise beeinflusst werden. So ist es beispielsweise möglich, dass durch die Gegenwart der Acrylatharze die Vergilbungsbeständigkeit und durch Zusatz der Alkydharze die Elastizität der daraus hergestellten Überzüge verbessert werden.

Bei der erfindungsgemässen Verwendung wird die erfindungsgemässe Dispersion mit Vorteil in Kombination mit Aminhärtern, vorzugsweise Aminkalthärtern, im Äquivalentverhältnis Epoxydäquivalent : Aminwasserstoffäquivalent = 1:(0,75 bis 1,5), oder in Kombination mit sauren Härtern eingesetzt.

Neben den bekannten aminischen Kalthärtern wie Trimethylhexamethylendiamin, Isophorondiamin, Xylylendiamin, den Polyäthylenpolyaminen und Polypropylenpolyaminen, die auch als Addukte von Polyglycidyläthern, als Polyamidoamine von dimerisierten Fettsäuren oder durch Umsetzung mit Phenolen und Formaldehyd als Mannich-Basen vorliegen können, eignen sich besonders gut die wasserlöslichen Polyoxypropylendiamine mit Molgewichten von 190 bis 2000 und leicht in Wasser dispergierbare Härtungsmittel, wie sie in der DE-AS 2 332 177 und der europäischen Patentanmeldung 605 beschrieben sind, also z.B. modifizierte Amin-Addukte. Zur Vervollständigung der Durchhärtung können die Beschichtungen auch 30 bis 120 Minuten auf 50–120 °C erhitzt werden.

Nach einer weiteren Ausführungsform der Erfindung ist es möglich, die erfindungsgemässen Dispersionen ohne Zusatz von Phenol- und/oder Aminharzen entsprechend ihrem Epoxydäquivalent mit sauren Härtungsmitteln wie Polycarbonsäuren bzw. ihren Anhydriden zu versetzen, z.B. im Verhältnis 1 COOH-Gruppe pro Epoxydgruppe.

Als saure Härtungsmittel eignen sich wasserlösliche Polycarbonsäuren, z.B. Cyclopentantetracarbonsäure, insbesondere Butantetracarbonsäuren wie Cyclobutantetracarbonsäure, vorzugsweise 1,2,3,4-Butantetracarbonsäure, ferner Aconitsäure, Citronensäure oder Anhydride dieser Säuren, sofern diese existieren, bzw. saure Ester dieser Säuren mit mehrwertigen Alkoholen mit 2 bis 12, vorzugsweise 2 bis 6 C-Atomen, wie Neopentylglykol, Glycerin, Trimethylol-äthan oder -propan, den Alkandiolen und deren Oligomeren, die gegebenenfalls eine oder mehrere Ätherbrükken enthalten, wie Äthylenglykol, Propan- und Butandiole, wobei die Ester stets mindestens 3 freie COOH-Gruppen aufweisen.

Es ist auch möglich, saure Ester mit 3 oder mehr COOH-Gruppen von Pyromellithsäure, Trimellithsäure, Phthalsäure, Endomethylentetra- oder -hexahydrophthalsäure, Maleinsäure, Fumarsäure bzw. deren Anhydriden, sofern diese existieren, mit mehrwertigen Alkoholen, z.B. den vorstehend genannten, als Polycarbonsäure-Härter zu verwenden, sofern diese sauren Ester eine ausreichende Wasserlöslichkeit bzw. Wasserverdünnbarkeit besitzen. Hierbei ist zu beachten, dass zweiwertige Carbonsäuren mit mindestens dreiwertigen Alkoholen bzw. zweiwertige Alkohole mit mindestens dreiwertigen Carbonsäuren umgesetzt werden, um eine ausreichende Anzahl von COOH-Gruppen im sauren Ester zu erzielen.

Den erfindungsgemässen wässrigen Dispersionen können auch 5 bis zu 50 Gew.-%, bezogen auf Feststoffe, eines Amino- und/oder Phenolharzes als zusätzliche Härter und soviel Wasser zugesetzt werden, dass sich ein Gesamtfeststoffgehalt von 10 bis 80 Gew.-% ergibt.

Als Aminharze eignen sich hierfür z.B. die handelsüblichen – vorzugsweise verätherten – Harnstoff-Formaldehyd- bzw. Melamin-Formaldehydharze, z.B. ein Hexamethoxymethylmelaminmaterial mit weitgehend monomerer Struktur oder entsprechende Harze oligomerer oder polymerer Natur. Gegebenenfalls kann man den Phenol- und/oder Aminharz enthaltenden Gemischen auch saure Katalysatoren, wie p-Toluolsulfonsäure, Cyclohexansulfaminsäure, saures Butylphosphat und Phosphorsäure zusetzen, um die Geschwindigkeit der Härtungsreaktion zu erhöhen, so dass man Filme oder Überzüge erzeugt, die bei niedrigerer Temperatur oder in kürzerer Zeit aushärten. Die Menge dieser sauren Katalysatoren beträgt z.B. bis zu 2 Gew.-%, bezogen auf Gesamtfeststoffgehalt.

Als Phenolharz-Härter seien Resole, Formaldehyd-Phenolcarbonsäureharze und Phenolharzvorprodukte genannt, wobei die handelsüblichen verätherten, mit Wasser verdünnbaren Phenolharzresole bevorzugt sind.

Die das Amino- und/oder Phenolharz enthaltenden Überzugsmassen kann man nach herkömmlichen Methoden, wie Streichen, Spritzen, Tauchen und Aufwalzen, auf ein Substrat auftragen. Die Überzüge werden, sofern keine Härter für die Kalthärtung mitverwendet werden, durch Erhitzen auf 100 bis 250 °C für eine zum Aushärten ausreichende Zeit, im allgemeinen etwa fünf Minuten bis etwa eine Stunde, gehärtet.

Den erfindungsgemässen Dispersionen können vor der Verarbeitung die üblichen Hilfsmittel, z.B.

Verlaufmittel, Entschäumer und/oder Netzmittel zugesetzt werden.

In nachstehenden Versuchen und Beispielen bedeutet % jeweils Gewichtsprozent. In den Beispielen wurde die Viskosität stets bei Raumtemperatur mit dem Brookfield-Viskosimeter, Spindel 2/12 U gemessen. U bedeutet Umdrehungen.

Herstellung der Dispergiermittel

In allen Fällen A bis I wurde das Reaktionsgemisch nach Zugabe der $BF_3$-Verbindung auf 130 °C erhitzt und diese Temperatur beibehalten, bis die Reaktion ausgeklungen war, kenntlich an einer Zunahme des Epoxydäquivalentgewichts auf den jeweils angegebenen Wert.

A) 150 g Polyäthylenglykol mit einem durchschnittlichen Molgewicht von 3000 und 18,5 g eines Polyglycidyläthers auf Basis von Bisphenol A mit einem Epoxydäquivalentgewicht von 185 wurden zusammen auf 100 °C erhitzt und unter Rühren mit 0,9 g $BF_3$-Ätherat, mit Dioxan auf 5% verdünnt, versetzt. Das Äquivalentverhältnis OH/Epoxyd betrug 1:1. Das Epoxydäquivalentgewicht betrug 360 000.

B) 200 g Polyäthylenglykol mit einem durchschnittlichen Molgewicht von 4000 und 18,5 g eines Polyglycidyläthers auf Basis von Bisphenol A mit einem Epoxydäquivalentgewicht von 185 wurden zusammen auf 100 °C erhitzt und unter Rühren mit 0,9 g $BF_3$-Ätherat versetzt. Äquivalentverhältnis OH/Epoxyd 1:1. Epoxydäquivalentgewicht 70 000.

C) 200 g Polyäthylenglykol mit einem durchschnittlichen Molgewicht von 4000 und 18,5 g eines Polyglycidyläthers auf Basis von Bisphenol A mit einem Epoxydäquivalentgewicht von 185 wurden zusammen auf 100 °C erhitzt und unter Rühren mit 0,9 g $BF_3$-Ätherat, mit Diäthyläther auf 5% verdünnt, versetzt. Äquivalentverhältnis OH/Epoxyd 1:1. Epoxydäquivalentgewicht 200 000.

D) 200 g Polyäthylenglykol mit einem durchschnittlichen Molgewicht von 4000 und 23,0 g eines Polyglycidyläthers auf Basis von Bisphenol A mit einem Epoxydäquivalentgewicht von 185 wurden zusammen auf 100 °C erhitzt und unter Rühren mit 0,9 g $BF_3$-Ätherat, mit Dioxan auf 5% verdünnt, versetzt. Äquivalentverhältnis OH/Epoxyd 1:1,25. Epoxydäquivalentgewicht 250 000.

E) 200 g Polyäthylenglykol mit einem durchschnittlichen Molgewicht von 4000 und 14,0 g eines Polyglycidyläthers auf Basis von Bisphenol A mit einem Epoxydäquivalentgewicht von 185 wurden zusammen auf 100 °C erhitzt und unter Rühren mit 0,9 g $BF_3$-Ätherat, mit Dioxan auf 5% verdünnt, versetzt. Äquivalentverhältnis OH/Epoxyd 1:0,75. Epoxydäquivalentgewicht 270 000.

F) 200 g Polyäthylenglykol mit einem durchschnittlichen Molgewicht von 4000 und 18,5 g eines Polyglycidyläthers auf Basis von Bisphenol A mit einem Epoxydäquivalentgewicht von 185 wurden zusammen auf 100 °C erhitzt und unter Rühren mit 1,2 g $BF_3$-Essigsäure, mit Äthylenglykolmonoäthyläther auf 5% verdünnt, versetzt. Äquivalentverhältnis OH/Epoxyd 1:1. Epoxydäquivalentgewicht 150 000.

G) 300 g Polyäthylenglykol mit einem durchschnittlichen Molgewicht von 6000 und 18,5 g eines Polyglycidyläthers auf Basis von Bisphenol A mit einem Epoxydäquivalentgewicht von 185 wurden zusammen auf 100 °C erhitzt und unter Rühren mit 1,2 g $BF_3$-Ätherat, mit Dioxan auf 5% verdünnt, versetzt. Äquivalentverhältnis OH/Epoxyd 1:1. Epoxydäquivalentgewicht 170 000.

H) 200 g Polyäthylenglykol mit einem durchschnittlichen Molgewicht von 4000 und 25,0 g eines Polyglycidyläthers auf Basis von Bisphenol A mit einem Epoxydäquivalentgewicht von 250 wurden zusammen auf 100 °C erhitzt und unter Rühren mit 1,2 g $BF_3$-Ätherat, mit Dioxan auf 5% verdünnt, versetzt. Äquivalentverhältnis OH/Epoxyd 1:1. Epoxydäquivalentgewicht 180 000.

I) 200 g Polyäthylenglykol mit einem durchschnittlichen Molgewicht von 4000 und 45,0 g eines Polyglycidyläthers auf Basis von Bisphenol A mit einem Epoxydäquivalentgewicht von 450 wurden zusammen auf 100 °C erhitzt und unter Rühren mit 2,0 g $BF_3$-Ätherat, mit Dioxan auf 5% verdünnt, versetzt. Äquivalentverhältnis OH/Epoxyd 1:1. Epoxydäquivalentgewicht 230 000.

Beispiele zur Herstellung der Dispersion

1) In einem 2 l-Dreihalskolben, ausgerüstet mit Thermometer und Flügelrührer, wurden 557 g eines Polyglycidyläthers auf Basis von Bisphenol A mit einem Epoxydäquivalentgewicht von 470 bei ca. 120 °C in 35 g n-Butanol und 104 g Toluol gelöst. Zu der auf 40 °C abgekühlten Lösung wurde eine Lösung von 45 g des Dispergiermittels C in 140 g deionisiertem Wasser zugesetzt. Unter kräftigem Rühren mit ca. 800 U/Minute wurde das Gemisch dispergiert, wobei eine hochviskose Öl-in-Wasser-Dispersion entstand. Diese wurde mit 800 g deionisiertem Wasser weiter verdünnt. Nach Zusatz eines Antischaummittels, z. B. auf Silikonbasis, wurde die Dispersion bei einem Druck von ca. 27 mbar und einer Temperatur von maximal 45 °C bis zu einem Festkörpergehalt von 54% eingeengt. Man erhielt eine weitgehend lösungsmittelfreie Dispersion mit einer Teilchengrösse von ca. 0,7 µm und einer Viskosität von 180 mPa.s.

2) Beispiel 1 wurde wiederholt. Es wurde jedoch zur Verdünnung 740 g deionisiertes Wasser zugesetzt. Auf die Vakuumdestillation wurde verzichtet. Man erhielt eine Dispersion mit einer Teilchengrösse von 0,65 µm mit einem Festkörpergehalt von 41%, die 9,5% Lösungsmittel enthielt. Viskosität etwa 50 mPa.s.

3) Beispiel 1 wurde wiederholt. Die Dispergierung wurde jedoch mit einem Dissolver bei 40 °C durch Verrühren von 5 Minuten mit 3000 U/Minute vorgenommen. Die Verdünnung mit der Wassermenge wurde danach bei niedrigerer Umdrehungszahl vorgenommen. Man erhielt eine weitgehend lösungsmittelfreie Dispersion mit einer Teilchengrösse von ca. 0,45 µm und einer Viskosität von 120 mPa.s.

4) Beispiel 1 wurde wiederholt. Die Dispergierung wurde jedoch mit 40 g des Dispergiermittels C vorgenommen. Man erhielt eine weitgehend

lösungsmittelfreie Dispersion mit einer Teilchengrösse von 0,8 µm und einer Viskosität von 190 mPa.s.

5) Beispiel 1 wurde wiederholt. Die Dispergierung wurde jedoch mit 56 g des Dispergiermittels C vorgenommen. Man erhielt eine weitgehend lösungsmittelfreie Dispersion mit einer Teilchengrösse von 0,7 µm und einer Viskosität von 210 mPa.s.

6) In einem 2 l-Dreihalskolben, ausgerüstet mit Thermometer und Flügelrührer, wurden 557 g eines Polyglycidyläthers auf Basis von Bisphenol A mit einem Epoxydäquivalentgewicht von 470 bei ca. 120 °C in 35 g iso-Butanol und 104 g Toluol gelöst. Anschliessend wurden 45 g des Dispergiermittels B in der Lösung aufgelöst. Zu der auf 40 °C abgekühlten Lösung wurde unter kräftigem Rühren mit ca. 800 U/Minute 940 g deionisiertes Wasser in Portionen von je 10% der Menge eingerührt. Nach jeder Zugabe wurde noch 10 Minuten nachgerührt. Ist die Dispersion umgeschlagen, was nach ca. 50% der Wassermenge geschieht, wurde die restliche Wassermenge in einer Portion zugesetzt.

Nach Zusatz eines Antischaummittels, z. B. auf Silikonbasis, wurde die Dispersion bei einem Druck von ca. 26,6 mbar und einer Temperatur von maximal 45 °C bis zu einem Festkörpergehalt von 54% eingeengt. Man erhielt eine weitgehend lösungsmittelfreie Dispersion mit einer Teilchengrösse von ca. 0,75 µm und einer Viskosität von 190 mPa.s.

7) Beispiel 6 wurde wiederholt. Es wurde jedoch zur Verdünnung 740 g deionisiertes Wasser zugesetzt. Auf die Vakuumdestillation wurde verzichtet. Man erhielt eine Dispersion mit einer Teilchengrösse von 0,80 µm mit einem Festkörpergehalt von 41%, die 9,5% Lösungsmittel enthielt. Viskosität etwa 50 mPa.s.

8) Beispiel 6 wurde wiederholt. Es wurden jedoch 577 g eines Polyglycidyläthers auf Basis von Bisphenol A mit einem Epoxydäquivalentgewicht von 400 eingesetzt. Man erhielt eine weitgehend lösungsmittelfreie Dispersion mit einem Festkörpergehalt von 54%, einer Teilchengrösse von ca. 0,70 µm und einer Viskosität von 180 mPa.s.

9) Beispiel 6 wurde wiederholt. Es wurden jedoch 557 g eines Polyglycidyläthers auf Basis von Bisphenol A mit einem Epoxydäquivalentgewicht von 560 eingesetzt. Man erhielt eine weitgehend lösungsmittelfreie Dispersion mit einem Festkörpergehalt von 54%, einer Teilchengrösse von ca. 0,75 µm und einer Viskosität von 170 mPa.s.

10) Beispiel 1 wurde wiederholt. Es wurden jedoch 557 g eines Polyglycidyläthers auf Basis von Bisphenol A mit einem Epoxydäquivalentgewicht von 900 eingesetzt. Die Dispergierung wurde mit einem Dissolver bei 40 °C durch Verrühren für 5 Minuten mit 3000 U/Minute vorgenommen. Die Verdünnung mit der Wassermenge wurde danach mit niedrigerer Umdrehungszahl vorgenommen. Man erhielt eine weitgehend lösungsmittelfreie Dispersion mit einer Teilchengrösse von ca. 0,40 µm und einer Viskosität von 150 mPa.s.

Beispiele zur Verwendung der Dispersion

11) Gemäss Beispiel 1 der vorliegenden Erfindung wurde eine Dispersion hergestellt und unter vermindertem Druck bis zu einem Festkörpergehalt von 58%, eingeengt. 1000 g dieser Dispersion wurden mit 30 g Toluol, 12 g i-Butanol, 5 g eines wassermischbaren Silikonöls, und 0,25 g eines Verlaufshilfsmittels versetzt. Je 187 g dieser Mischung wurden mit folgenden Mengen aminischer Härter intensiv vermischt:

A) Mit 12,2 g eines Polyoxypropylendiamins mit einem mittleren Molgewicht von 230.

B) Mit 38 g eines aminischen Härtungsmittels, das gemäss Beispiel 1 der DE-AS 2 332 177 hergestellt wurde.

C) Mit 50 g eines aminischen Härtungsmittels, das gemäss Beispiel 3 A bis C der europäischen Patentanmeldung 605 hergestellt wurde.

Die Mischungen wurden jeweils mit Nassschichtstärken von 90 und 200 µm auf Glasplatten, geschmirgeltem Eisenblech und Eternitplatten aufgetragen. Die Filme härteten in 2 bis 3 Stunden zu klaren, harten und xylolbeständigen Überzügen aus. Durch Tempern der Überzüge bei 50 bis 100 °C in 30 bis 60 Minuten wurden Härte, Elastizität und Chemikalienbeständigkeit weiter verbessert.

12) bis 14)

Je 100 g einer Dispersion, die gemäss Beispiel 3 hergestellt wurde und bis zu einem Festkörpergehalt von 58%, eingeengt worden war, wurden mit 8 g Hexamethoxymethylmelamin (Beispiel 12) bzw. 16 g eines wasserlöslichen Phenolharzes (Resol) (Beispiel 13) bzw. mit 6,3 g Butantetracarbonsäure, mit $H_2O$ zu einer 20%igen Lösung verdünnt, (Beispiel 14) intensiv vermischt. Als Hilfsmittel zur Verbesserung der Filmbildung wurden jeweils 0,3 g eines wasserlöslichen Silikonöls, das 1:1 mit Wasser verdünnt wurde, zugesetzt. Die Härtung wurde jeweils durch Zusatz von 0,1 g p-Toluolsulfonsäure, 40% in Wasser gelöst, beschleunigt. Durch Zusatz von deionisiertem Wasser wurde jeweils auf 45% Festkörpergehalt verdünnt. Die Dispersion wurde in solcher Stärke auf entfettetes Aluminiumblech aufgetragen, dass nach dem Einbrennen bei 200 °C für 10 Minuten eine Trockenfilmstärke von 6 µm erzeugt wurde. Man erhielt Überzüge, die hervorragende mechanische Eigenschaften und Chemikalienbeständigkeit aufwiesen.

**Patentansprüche für die Vertragsstaaten: BE, CH, DE, FR, GB, Li, NL**

1. Stabile wässrige Dispersion mit einem niedrigen Gehalt an Lösungsmitteln auf der Basis eines Epoxydharzes, einem nicht-ionogenen Dispergiermittel in Form eines Polyalkylenglykolderivats, organischen Lösungsmitteln und Wasser, dadurch gekennzeichnet, dass sie

a) mindestens 35 Gew.-% Epoxydharz mit einem mittleren Epoxydäquivalent von 250 bis 5000,

b) 2 bis 20 Gew.-%, bezogen auf das feste Epoxydharz, Dispergiermittel, bestehend aus Kondensationsprodukten von Polyalkylenglykolen

mit Molgewichten von 200 bis 20 000 und Polyglycidyläthern mehrwertiger Phenole mit einem Epoxydäquivalentgewicht von 100 bis 2000 im Äquivalentverhältnis OH : Epoxyd-Gruppen 1:(0,85 bis 1,5),

c) 0,2 bis 20 Gew.-% organische Lösungsmittel mit einem Siedepunkt unter 160 °C und

d) 35 bis 60 Gew.-% Wasser enthält, wobei die Summe der Anteile stets 100 Gew.-% beträgt, die Teilchengrösse im Durchschnitt kleiner als 1 µm ist und der Gesamtfeststoffgehalt der Dispersion 10 bis 80 Gew.-% beträgt.

2. Dispersion nach Anspruch 1, dadurch gekennzeichnet, dass das Epoxydharz a) bzw. die Polyglycidylätherkomponente des Dispergiermittels b) ein Polyglycidyläther auf Basis von Diphenylolpropan ist.

3. Dispersion nach Anspruch 1 oder 2, dadurch gekennzeichnet, dass das nichtionische Dispergiermittel b) ein Kondensationsprodukt aus Polyalkylenglykolen mit Molgewichten von 2000 bis 10 000 und Polyglycidyläthern mehrwertiger Phenole mit Epoxydäquivalentgewichten von 150 bis 450 im Äquivalentverhältnis OH- : Epoxydgruppe von 1:(1 bis 1,25) ist und vorzugsweise in einer Menge von 7–15 Gew.-% vorliegt.

4. Dispersion nach einem oder mehreren der Ansprüche 1 bis 3, dadurch gekennzeichnet, dass sie in Form einer Dispersion im engeren Sinne vorliegt und der Gehalt des Lösungsmittels c) 0,2 bis 5 Gew.-% beträgt.

5. Dispersion nach einem oder mehreren der Ansprüche 1 bis 3, dadurch gekennzeichnet, dass sie in Form einer Emulsion vorliegt und der Gehalt des Lösungsmittels c) 5 bis 20 Gew.-% beträgt.

6. Verfahren zur Herstellung der Dispersion nach einem oder mehreren der Ansprüche 1 bis 5, dadurch gekennzeichnet, dass eine 40 bis 95 Gew.-%ige Lösung des Epoxydharzes a) in organischen Lösungsmitteln zusammen mit einer 10 bis 90 Gew.-%igen wässrigen Lösung des Dispergiermittels b) bis zu einer feinteiligen Öl-in-Wasser-Dispersion dispergiert und anschliessend mit weiterem Wasser auf einen Festkörpergehalt von 10 bis 80 Gew.-% verdünnt wird, wobei der Anteil des Dispergiermittels, bezogen auf das feste Epoxydharz, 2 bis 20 Gew.-% beträgt.

7. Verfahren nach Anspruch 6, dadurch gekennzeichnet, dass der Lösungsmittelanteil durch Destillation unter vermindertem Druck von 13 bis 133 mbar und bei einer Temperatur von höchstens 50 °C eingestellt wird.

8. Verwendung der Dispersion nach einem oder mehreren der Ansprüche 1 bis 5 oder der nach dem Verfahren der Ansprüche 6 oder 7 hergestellten Dispersion in Kombination mit Härtungsmitteln zur Herstellung von gehärteten Formkörpern, insbesondere Überzügen.

9. Verwendung nach Anspruch 8, dadurch gekennzeichnet, dass die Dispersion in Kombination mit mindestens einem Aminhärter der Gruppe Polyoxypropylenamine – vorzugsweise mit Molgewichten von 190–2000 – Polyglycidyläther-Aminaddukte oder Polyamidoamine oder mindestens einem Säurehärter der Gruppe wasserlösliche Polycarbonsäuren, insbesondere Butantetracarbonsäuren verwendet wird, wobei die Aminhärter im Äquivalentverhältnis Epoxydäquivalent : Aminwasserstoffäquivalent = 1:(0,75 bis 1,5) verwendet werden.

10. Verwendung nach Anspruch 8 oder 9, dadurch gekennzeichnet, dass das Gemisch zusätzlich 5 bis 50 Gew.-% – vorzugsweise verätherte – Amin-und/oder Phenolharze allein oder in Kombination mit weiteren Kondensations-, Polymerisations- und/oder Additionsharzen enthält.

**Patentansprüche für den Vertragsstaat: AT**

1. Verfahren zur Herstellung von lösungsmittelarmen, stabilen wässrigen Epoxydharzdispersionen, dadurch gekennzeichnet, dass eine 40 bis 95 Gew.-%ige Lösung eines Epoxydharzes a) mit einem mittleren Epoxydäquivalentgewicht von 250 bis 5000 in organischen Lösungsmitteln zusammen mit einer 10 bis 90 Gew.-%igen wässrigen Lösung eines Dispergiermittels b) bestehend aus Kondensationsprodukten von Polyalkylenglykolen mit Molgewichten von 200 bis 20 000 und Polyglycidyläthern mehrwertiger Phenole mit einem Epoxydäquivalentgewicht von 100 bis 2000 im Äquivalentverhältnis OH-: Epoxyd-Gruppen 1:(0,85 bis 1,5), bis zu einer feinteiligen Öl-in-Wasser-Dispersion dispergiert und anschliessend mit weiterem Wasser auf einen Festkörpergehalt von 10 bis 80 Gew.-% verdünnt wird, wobei der Anteil des festen Epoxydharzes mindestens 35 Gew.-% und der des Dispergiermittels b), bezogen auf das feste Epoxydharz a), 2 bis 20 Gew.-% beträgt, der Gehalt an organischen Lösungsmitteln c) mit einem Siedepunkt unter 160 °C 0,2 bis 20 Gew.-% und der an Wasser d) 35 bis 60 Gew.-% ist, wobei die Summe der Anteile a) bis d) stets 100 Gew.-% beträgt und die Teilchengrösse in der Dispersion im Durchschnitt kleiner als 1 µm ist.

2. Verfahren nach Anspruch 1, dadurch gekennzeichnet, dass das Epoxydharz a) bzw. die Polyglycidylätherkomponente des Dispergiermittels b) ein Polyglycidyläther auf Basis von Diphenylolpropan ist.

3. Verfahren nach Anspruch 1 oder 2, dadurch gekennzeichnet, dass das nichtionische Dispergiermittel b) ein Kondensationsprodukt aus Polyalkylenglykolen mit Molgewichten von 2000 bis 10 000 und Polyglycidyläthern mehrwertiger Phenole mit Epoxydäquivalentgewichten von 150 bis 450 im Äquivalentverhältnis OH- : Epoxydgruppe von 1: (1 bis 1,25) ist und vorzugsweise in einer Menge von 7–15 Gew.-% vorliegt.

4. Verfahren nach einem oder mehreren der Ansprüche 1 bis 3, dadurch gekennzeichnet, dass eine Dispersion im engeren Sinne hergestellt wird und der Gehalt des Lösungsmittels c) 0,2 bis 5 Gew.-% beträgt.

5. Verfahren nach einem oder mehreren der Ansprüche 1 bis 3, dadurch gekennzeichnet, dass eine Emulsion hergestellt wird und der Gehalt des Lösungsmittels c) 5 bis 20 Gew.-% beträgt.

6. Verfahren nach Anspruch 5, dadurch gekennzeichnet, dass der Lösungsmittelanteil durch Destillation unter vermindertem Druck von 13 bis 133 mbar und bei einer Temperatur von höchstens 50 °C eingestellt wird.

7. Verwendung der nach dem Verfahren eines oder mehrerer der Ansprüche 1 bis 6 hergestellten Dispersion in Kombination mit Härtungsmitteln zur Herstellung von gehärteten Formkörpern, insbesondere Überzügen.

8. Verwendung nach Anspruch 7, dadurch gekennzeichnet, dass die Dispersion in Kombination mit mindestens einem Aminhärter der Gruppe Polyoxypropylenamine – vorzugsweise mit Molgewichten von 190–2000 – Polyglycidyläther-Aminaddukte oder Polyamidoamine oder mindestens einem Säurehärter der Gruppe wasserlösliche Polycarbonsäuren, insbesondere Butantetracarbonsäuren verwendet wird, wobei die Aminhärter im Äquivalentverhältnis Epoxydäquivalent : Aminwasserstoffäquivalent = 1:(0,75 bis 1,5) verwendet werden.

9. Verwendung nach Anspruch 7 oder 8, dadurch gekennzeichnet, dass das Gemisch zusätzlich 5 bis 50 Gew.-% – vorzugsweise verätherte – Amin- und/oder Phenolharze allein oder in Kombination mit weiteren Kondensations-, Polymerisations- und/oder Additionsharzen enthält, wobei die Gew.-% auf die Feststoffe bezogen sind.

**Claims: for the Contracting states: BE, CH, DE, FR, GB, Li, NL**

1. A low-solvent, stable, aqueous dispersion based on an epoxy resin, a non-ionic dispersant in the form of a polyalkylene glycol derivative, organic solvents and water characterized in that it contains

a) at least 35% by weight of epoxy resin with an average epoxide equivalent of 250 to 5000,

b) 2 to 20% by weight of dispersant, based on the solid epoxy resin, which consists of condensation products of polyalkylene glycols having molecular weights of 200 to 20 000 and polyglycidyl ethers of polyhydric phenols having an epoxide equivalent weight of 100 to 2000 in an equivalent ratio of OH to epoxide groups of 1:(0.85 to 1.5),

c) 0.2 to 20% by weight of organic solvents having a boiling point below 160 °C and

d) 35 to 60% by weight of water,

the proportions always totalling 100% by weight, the particle size being on average less than 1 µm and the total solids content of the dispersion being 10 to 80% by weight.

2. A dispersion as claimed in claim 1, characterized in that the epoxide resin a) or the polyglycidyl ether component of the dispersant b) is a diphenylolpropane-based polyglycidyl ether.

3. A dispersion as claimed in claim 1 or 2, characterized in that the non-ionic dispersant b) is a condensation product of polyalkylene glycols having molecular weights of 2000 to 10 000 and polyglycidyl ethers of polyhydric phenols having epoxide equivalent weights of 150 to 450 in an equivalent ratio of OH to epoxide groups of 1:(1 to 1.25) and is preferably present in an amount of 7–15% by weight.

4. A dispersion as claimed in one or more of claims 1 to 3, characterized in that it is in the form of a dispersion within the narrower meaning of the word and contains 0.2 to 5% by weight of solvent c).

5. A dispersion as claimed in one or more of claims 1 to 3, characterized in that it is in the form of an emulsion and contains 5 to 20% by weight of solvent c).

6. A process for preparing a dispersion as claimed in one or more of claims 1 to 5, characterized in that a 40 to 95% by weight solution of epoxide resin a) in organic solvents is dispersed together with a 10 to 90% by weight aqueous solution of dispersant b) to give a finely divided oil-in-water dispersion, which is then diluted with further water to a solids content of 10 to 80% by weight, and the dispersant content, relative to the solide epoxide resin, is 2 to 20% by weight.

7. The process as claimed in claim 6, characterized in that the solvents content is obtained by distillation under reduced pressure of 13 to 133 mbar and at a temperature of at most 50 °C.

8. The use of a dispersion as claimed in one or more of claims 1 to 5 or of a dispersion prepared by the process of claims 6 or 7 in combination with hardeners for preparing hardened shaped articles, in particular, surface coatings.

9. The use as claimed in claim 8, characterized in that the dispersion is used in combination with at least one amine hardener from the group consisting of polyoxypropyleneamines – preferably having molecular weights of 190–2000 – polyglycidyl ether amine adducts or polyamidoamines or at least one acid hardener from the group consisting of water-soluble polycarboxylic acids, in particular butantetracarboxylic acids, the amine hardener being used in an equivalent ratio of epoxide equivalent to amine hydrogen equivalent of 1:(0.75 to 1.5).

10. The use as claimed in claim 8 or 9, characterized in that the mixture contains additionally 5 to 50% by weight of – preferably etherified – amine and/or phenolic resins alone or in combination with further condensation, polymerization and/or addition resins.

**Claims for the Contracting state: AT**

1. A process for preparing low-solvent, stable, aqueous dispersions based on epoxy resins, characterized in that a 40 to 95% by weight solution of epoxide resin a) with an average epoxide equivalent of 250 to 5000, in organic solvents is dispersed together with a 10 to 90% by weight aqueous solution of dispersant b) which consists of condensation products of polyalkylene glycols having molecular weights of 200 to 20 000 and polyglycidyl ethers of polyhydric phenols having an epoxide equivalent weight of 100 to 2000 in an equivalent ratio of OH to epoxide groups of 1:(0.85 to 1.5), to give a finely divided oil-in-water dispersion, which is then diluted with further water to a solids content of 10 to 80% by weight, in which the

content of the solid epoxy resin is at least 35% by weight and that of the dispersant, relative to the solid epoxide resin a), is 2 to 20% by weight, the amount of organic solvents c) having a boiling point below 160 °C is 0.2 to 20% by weight and that of water d) is 35 to 60% by weight, the proportions a) to d) always totalling 100% by weight and the particle size being on average less than 1 µm.

2. A process as claimed in claim 1, characterized in that the epoxide resin a) or the polyglycidyl ether component of the dispersant b) is a diphenylolpropane-based polyglycidyl ether.

3. A process as claimed in claim 1 or 2, characterized in that the non-ionic dispersant b) is a condensation product of polyalkylene glycols having molecular weights of 2000 to 10 000 and polyglycidyl ethers of polyhydric phenols having epoxide equivalent weight of 150 to 450 in an equivalent ratio of OH to epoxide groups of 1:(1 to 1.25) and is preferably present in an amount of 7–15% by weight.

4. A process as claimed in one or more of claims 1 to 3, characterized in that a dispersion within the narrower meaning of the word is produced in which the content of solvent c) is 0.2 to 5% by weight.

5. A process as claimed in one or more of claims 1 to 3, characterized in that an emulsion is produced which contains 5 to 20% by weight of solvent c).

6. A process as claimed in claim 5, characterized in that the solvents content is obtained by distillation under reduced pressure of 13 to 133 mbar and at a temperature of at most 50 °C.

7. The use of a dispersion prepared by the process as claimed in one or more of claims 1 to 6 in combination with hardeners for preparing hardened shaped articles, in particular, surface coatings.

8. The use as claimed in claim 7, characterized in that the dispersion is used in combination with at least one amine hardener from the group consisting of polyoxypropyleneamines – preferably having molecular weights of 190–2000 – polyglycidyl ether amine adducts or polyamidoamines or at least one acid hardener from the group consisting of water-soluble polycarboxylic acids, in particular butanetetracarboxylic acids, the amine hardener being used in an equivalent ratio of epoxide equivalent to amine hydrogen equivalent of 1:(0.75 to 1.5).

9. The use as claimed in claims 7 or 8, characterized in that the mixture contains additionally 5 to 50% by weight of – preferably etherified – amine and/or phenolic resins alone or in combination with further condensation, polymerization and/or addition resins, the percentages are based on the solid resins.

**Revendications pour les Etats contractants: BE, CH, DE, FR, GB, Li, NL**

1. Dispersion aqueuse stable à faible teneur en solvants comprenant une résine époxyde, un dispersant non ionogène qui est un dérivé de polyalkylène-glycol, des solvants organiques et de l'eau, dispersion qui se caractérise en ce qu'elle contient:

a) au moins 35% en poids d'une résine époxyde ayant un poids équivalent moyen d'époxyde de 250 à 5000,

b) 2 à 20%, du poids de la résine époxyde solide, d'un agent dispersant composé de produits de condensation de polyalkylène-glycols à masse moléculaire de 200 à 20 000, avec des éthers polyglycidyliques de polyphénols ayant un poids équivalent d'époxyde de 100 à 2000, dans un rapport d'équivalents OH- : groupes époxydes de 1: (0,85 à 1,5),

c) 0,2 à 20% en poids d'un solvant organique ayant un point d'ébullition inférieur à 160 °C, et

d) 35 à 60% en poids d'eau,

la somme des constituants ci-dessus formant toujours 100%, la dimension moyenne des particules étant inférieure à 1 µm et la teneur totale en matières solides de la dispersion étant de 10 à 80% en poids.

2. Dispersion selon la revendication 1 caractérisée en ce que la résine époxyde a) ou la composante d'éther polyglycidylique du dispersant b) est un éther polyglycidylique de diphénylolpropane.

3. Dispersion selon la revendication 1 ou 2 caractérisée en ce que le dispersant non-ionique b) est un produit de condensation de polyalkylène-glycols à masses moléculaires de 2000 à 10 000 et d'éthers polyglycidiliques de polyphénols ayant des poids équivalents d'époxydes de 150 à 450 dans un rapport d'équivalents OH- : groupe époxyde de 1:(1 à 1,25), de préférence dans une proportion de 7 à 15% en poids.

4. Dispersion selon une ou plusieurs des revendications 1 à 3, caractérisée en ce qu'elle est sous la forme d'une dispersion au sens étroit de ce terme et en ce que sa teneur en solvant c) est de 0,2 à 5% en poids.

5. Dispersion selon une ou plusieurs des revendications 1 à 3, caractérisée en ce qu'elle est sous la forme d'une émulsion et en ce que sa teneur en solvant c) est de 5 à 20% en poids.

6. Procédé de préparation d'une dispersion selon une ou plusieurs des revendications 1 à 5 précédentes, procédé caractérisé en ce que l'on disperse une solution à 40 à 95% en poids de la résine époxyde a) dans un solvant organique, avec une solution aqueuse à 10 à 90% en poids du dispersant b), jusqu'à formation d'une fine dispersion huile-dans-eau, que l'on dilue ensuite avec une nouvelle quantité d'eau à une teneur en matières solides de 10 à 80% en poids, la teneur en dispersant étant de 2 à 20% du poids de la résine époxyde solide.

7. Procédé selon la revendication 6 caractérisé en ce que l'on règle la teneur en solvant par distillation sous une pression réduite entre 13 et 133 mbar à une température ne dépassant pas 50 °C.

8. L'utilisation de dispersions suivant une ou plusieurs des revendications 1 à 5 ou qui ont été obtenues par le procédé de la revendication 6 ou 7, associées avec des agents de durcissement,

pour former des corps moulés durcis, et en particulier des revêtements.

9. Utilisation selon la revendication 8, caractérisée en ce que la dispersion est employée conjointement avec un ou plusieurs durcisseurs aminés du groupe de polyoxypropylène-amines (ayant de préférence des masses moléculaires de 190 à 2000), de produits d'addition d'éthers polyglycidyliques et d'amines ou de polyamido-amines, ou avec un ou plusieurs durcisseurs acides du groupe d'acides polycarboxyliques hydrosolubles, en particulier d'acides butanetétracarboxyliques, les durcisseurs aminés étant ajoutés dans un rapport d'équivalents équivalent d'époxyde : équivalent d'hydrogène de l'amine de 1:(0,75 à 1,5).

10. Utilisation selon la revendication 8 ou 9, caractérisée en ce que le mélange contient en outre 5 à 50% en poids de résines d'amines et/ou phénoliques de préférence éthérifiées, seules ou avec d'autres résines de condensation, de polymérisation et/ou d'addition.

**Revendications pour l'Etat contractant: AT**

1. Procédé de préparation de dispersions aqueuses stables de résines époxydes, contenant peu de solvants, procédé caractérisé en ce que l'on disperse une solution à 40–95% en poids d'une résine époxyde a) ayant un poids équivalent d'époxyde moyen de 250 à 5000, dans des solvants organiques, avec une solution aqueuse à 10–90% en poids d'un agent dispersant b) comprenant des produits de condensation de polyalkylène-glycols à masses moléculaires de 200 à 20 000 et d'éthers polyglycidyliques de polyphénols ayant un poids équivalent d'époxyde de 100 à 2000 dans un rapport d'équivalents OH- : groupes époxyde de 1:(0,85 à 1,5), jusqu'à la formation d'une fine dispersion huile-dans-eau que l'on dilue ensuite avec une nouvelle quantité d'eau à une teneur en matières solides de 10 à 80% en poids, la proportion de la résine époxyde solide étant d'au moins 35% en poids et celle du dispersant b) de 2 à 20% du poids de la résine époxyde solide a), la teneur en solvants organiques c) ayant un poids d'ébullition inférieur à 160 °C étant de 0,2 à 20% en poids et la teneur en eau d) de 35 à 60% en poids, la somme des constituants a) et d) formant toujours 100% et la dimension moyenne des particules de la dispersion étant inférieure à 1 μm.

2. Procédé selon la revendication 1 caractérisé en ce que la résine époxyde a) ou la composante d'éther polyglycidylique du dispersant b) est un éther polyglycidylique de diphénylolpropane.

3. Procédé selon la revendication 1 ou 2, caractérisé en ce que le dispersant non-ionique b) est un produit de condensation de polyalkylène-glycols à masses moléculaires de 2000 à 10 000 et d'éthers polyglycidyliques de polyphénols ayant des poids équivalents d'époxyde de 150 à 450 dans un rapport d'équivalents OH- : groupes époxyde 1:(1 à 1,25), de préférence dans une proportion de 7 à 15% en poids.

4. Procédé selon une ou plusieurs des revendications 1 à 3, caractérisé en ce que l'on prépare une dispersion au sens étroit de ce terme, dont la teneur en solvant c) est de 0,2 à 5% en poids.

5. Procédé selon une ou plusieurs des revendications 1 à 3, caractérisé en ce que l'on prépare une émulsion avec une teneur en solvant c) de 5 à 20% en poids.

6. Procédé selon la revendication 5 caractérisé en ce que l'on règle la teneur en solvant par distillation sous une pression réduite entre 13 et 133 mbar, à une température ne dépassant pas 50 °C.

7. L'utilisation des dispersions qui ont été obtenues par un procédé selon une ou plusieurs des revendications 1 à 6, conjointement avec des agents de durcissement, pour en former des objets moulés durcis, en particulier des revêtements.

8. Utilisation selon la revendication 7 caractérisée en ce que la dispersion est employée conjointement avec un ou plusieurs durcisseurs aminés du groupe de polyoxypropylène-amines (ayant de préférence des masses moléculaires de 190 à 2000), de produits d'addition d'éthers polyglycidyliques et d'amines ou de polyamido-amines, ou avec un ou plusieurs durcisseurs acides du groupe d'acides polycarbocyliques hydrosolubles, en particulier d'acides butane-tétracarboxyliques, les durcisseurs aminés étant ajoutés dans un rapport d'équivalents équivalent d'époxyde : équivalent d'hydrogène de l'amine de 1:(0,75 à 1,5).

9. Utilisation selon la revendication 7 ou 8, caractérisée en ce que le mélange contient en outre 5 à 50% en poids de résines d'amines et/ou phénoliques, de préférence éthérifiées, seules ou avec d'autres résines de condensation, de polymérisation et/ou d'addition, par rapport au poids des matières solides.